# EUROPÄISCHE PATENTSCHRIFT

(11) **EP 1 089 819 B1**
(45) Veröffentlichungstag und Bekanntmachung des Hinweises auf die Patenterteilung: **31.07.2002**
(21) Anmeldenummer: 99924994.9
(22) Anmeldetag: 17.05.1999
(51) Int. Cl.: B01J 35/04, F01N 3/28

(54) **MONOLITHISCHER METALLISCHER WABENKÖRPER MIT VARIIERENDER KANALZAHL**
MONOLITHIC, METALLIC HONEYCOMB BODIES WITH A NUMBER OF VARYING CHANNELS
CORPS EN NIDS D'ABEILLES METALLIQUE MONOLITHIQUE AVEC UN NOMBRE DE CANAUX VARIABLE

(30) Priorität: 26.05.1998 DE 19823469
(43) Veröffentlichungstag der Anmeldung: 11.04.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE)
(74) Vertreter: Kahlhöfer, Hermann, Dipl.-Phys.
(86) Internationale Anmeldenummer: EP9903388
(87) Internationale Veröffentlichungsnummer: WO9961151

(56) Entgegenhaltungen:
- EP-A- 0 245 737
- WO-A-90/03220
- WO-A-92/02716
- WO-A-97/23325

## Beschreibung

Die vorliegende Erfindung bezieht sich auf einen monolithischen metallischen Wabenkörper, der vorzugsweise als Katalysator-Trägerkörper für die katalytische Umsetzung von Abgasen von Verbrennungskraftmaschinen verwendet wird, sowie auf ein Verfahren zu seiner Herstellung.

Derartige Wabenkörper sind in einer Vielzahl von Ausgestaltungen bekannt, beispielsweise durch die EP 0 245 737 B1 und die EP 0 430 945 B1.

Es ist auch bekannt, daß es für eine möglichst effektive Abgasreinigung sinnvoll sein kann, mehrere Scheiben, gegebenenfalls auch unterschiedlicher Wabenstruktur oder Wabengröße in Strömungsrichtung hintereinander anzuordnen. Ein solcher Körper ist jedoch nicht mehr monolithisch, so daß ein höherer Aufwand bei der Fertigung, dem Einbinden in ein Mantelrohr und gegebenenfalls auch bei der Beschichtung des Wabenkörpers erforderlich ist Für metallische Wabenkörper ist es daher z.B. aus der EP 0 484 364 B1 auch bekannt, zusätzliche Anströmkanten im Inneren durch Umstülpungen von Teilbereichen der Wellenberge oder Wellentäler zu schaffen. Dadurch wird zwar bezüglich der Strömungsverteilung im Inneren des Wabenkörpers ein ähnlicher Effekt wie bei hintereinander angeordneten Scheiben unterschiedlicher Kanalgrößen erreicht, jedoch bleibt die zur Verfügung stehende katalytisch aktive Fläche unverändert, so daß dadurch nicht tatsächlich alle Vorteile von hintereinander angeordneten Scheiben mit unterschiedlichen Kanalgrößen erzielt werden können.

Aus der US 5 549 873 A ist auch ein monolithischer Wabenkörper bekannt, bei dem ein vorderer Bereich durch Aussparungen in den Blechlagen eine geringere Kanalzahl und insbesondere eine geringere Wärmekapazität als der übrige Bereich aufweist.

Damit ein Wabenkörper als monolithischer Körper bezeichnet werden kann, muß dieser einen inneren Zusammenhalt aulweisen. Durch die EP 0 542 775 B1 ist schon ein monolithischer Wabenkörper bekannt, bei dem der innere Zusammenhalt durch glatte oder im Verhältnis zu den Dimensionen der Kanäle schwache strukturierte Blechlagen erzielt wird, indem ein Teil der Blechlagen in dem Wabenkörper sich durchgehend von der anströmseitigen zur abströmseitigen Stirnseite erstreckt. Der Wabenkörper weist in verschiedenen in Strömungsrichtung hintereinanderliegenden Teilabschnitten unterschiedliche Anzahlen von Blechlagen und Kanälen pro Querschnittsfläche, d.h. unterschiedlich große Kanäle, auf. Die gewünschte Variation der Kanalzahl und damit der katalytisch aktiven Flächen wird bei einem nach der EP 0 543 775 B1 bekannten Wabenkörper dadurch erzielt, daß der monolithische Wabenkörper aus Blechen unterschiedlicher Breite und mit unterschiedlich dimensionierten Strukturen aufgebaut wird. Von diesem Stand der Technik geht die vorliegende Erfindung aus.

Die Herstellung eines solchen Wabenkörpers ist relativ aufwendig, da mehrere unterschiedlich strukturierte Bleche aufeinander und nebeneinander lagenweise geschichtet werden müssen. Die Handhabung eines solchen geschichteten Stapels ist relativ schwierig, insbesondere dann, wenn der Stapel mit seinen beiden Enden um wenigstens zwei Fixpunkte geschlungen werden soll.

Aufgabe der vorliegenden Erfindung ist es, einen Aufbau eines solchen monolithischen Wabenkörpers anzugeben, welcher mit variierender Kanalzahl und ggf. auch abschnittsweise variierender Wärmekapazität einfacher herstellbar ist, sowie ein entsprechendes Herstellungsverfahren zu schaffen.

Dieses Ziel wird durch einen monolithischen von einem Fluid in einer Strömungsrichtung durchströmbaren Wabenkörper mit einer anströmseitigen Stirnseite und einer von dieser beabstandeten abströmseitigen Stirnseite erreicht, der lagenweise angeordnete, zumindest teilweise strukturierte Bleche umfaßt, deren Strukturen in Strömungsrichtung Wände von Kanälen bilden, wobei die Anzahl der Kanäle in verschiedenen in Strömungsrichtung hintereinanderliegenden Teilabschnitten variiert. Der innere Zusammenhalt des Körpers wird dadurch erzielt, daß zumindest ein Teil der strukturierten Bleche sich von der anströmseitigen zur abströmseitigen Stirnseite erstreckt, wobei jedes Blech mindestens eine erste und eine zweite Struktur unterschiedlicher Dimensionen aufweist und sich mindestens eine dieser Strukturen nur über einen Teilabschnitt erstreckt.

Im Gegensatz zu dem bekannten monolithischen Wabenkörper wird der innere Zusammenhalt nicht oder nicht nur durch glatte oder im Verhältnis zur Dimension der Kanäle schwach strukturierte Blechlagen erzielt, sondern (auch) durch die strukturierten Bleche, deren Strukturen in Strömungsrichtung Kanäle bilden. Dadurch wird der Zusammenhalt des Körpers verstärkt und/oder die Herstellung vereinfacht, weil weniger einzelne strukturierte Blechstreifen gehandhabt werden müssen.

Bevorzugt wird eine Ausführungsform des Wabenkörpers, bei der der Wabenkörper mit zwischen den strukturierten Blechen angeordneten glatten oder im Verhältnis zu den Dimensionen der Kanäle schwach strukturierten Blechen versehen ist. Die glatten oder im Verhältnis zu den Dimensionen der Kanäle schwach strukturierten Bleche erstrecken sich wenigstens über einen Teilabschnitt des Wabenkörpers. Es können auch glatte Bleche vorgesehen sein, die sich über die gesamte Länge des Wabenkörpers erstrecken. Diese glatten oder im Verhältnis zu den Dimensionen der Kanäle schwach strukturierten Bleche verleihen dem Wabenkörper einen zusätzlichen inneren Halt, wodurch die monolithische Eigenschaft des Wabenkörpers weiter verstärkt wird.

Gemäß einem weiteren Gedanken wird vorgeschlagen, den Wabenkörper mit weiteren strukturierten Blechen zu versehen, die sich wenigstens über einen Teilabschnitt des Wabenkörpers erstrecken. Ein solcher Wabenkörper ist folglich aus Blechen unterschiedlicher Breite und mit unterschiedlich dimensionierten Strukturen aufgebaut, wodurch eine Variation der Kanalzahl und somit auch der katalytisch aktiven Flächen erzielt wird. Die weiteren strukturierten Bleche sind vorzugsweise zwischen den sich von der anströmseitigen zur abströmseitigen Stirnseite erstreckenden Blechen angeordnet. Sie füllen die Abstände zwischen den letztgenannten Blechen aus.

Vorzugsweise sind die weiteren strukturierten Bleche so angeordnet, daß der Wabenkörper in Strömungsrichtung einen konstanten Querschnitt aufweist. Ein solcher Wabenkörper erfordert einen konstruktiv einfachen Mantel, welcher bei einem im Querschnitt kreisförmigen Wabenkörper rohrförmig ausgebildet sein kann.

Vorzugsweise weist jedes durch den ganzen Körper hindurchgehende strukturierte Blech Strukturen auf, die bezüglich einer gemeinsamen Ebene symmetrisch ausgebildet sind. Ein Wabenkörper aufgebaut aus so ausgebildeten Blechen ist einfacher zu handhaben, da man seine Orientierung nicht beachten muß.

Bevorzugt wird ein Wabenkörper, bei dem die den ganzen Körper durchdringenden strukturierten Bleche zwischen den benachbarten Strukturen unterschiedlicher Dimension im wesentlichen quer zur Strömungsrichtung verlaufende im Abstand zueinander ausgebildete körperliche Trennlinien aufweisen. Der Vorteil solcher Bleche besteht darin, daß zwischen den benachbarten Strukturen unterschiedlicher Dimensionen ein sprunghafter Übergang zwischen den Strukturen besteht. Die gestreckte Länge der Strukturen mit unterschiedlicher Dimension entspricht der Länge der körperlichen Trennlinie. Die Strukturen können unterschiedliche Höhen oder Gestalten aufweisen.

Die Verbindung zwischen den benachbarten Strukturen unterschiedlicher Dimension verbleibt durch die Abschnitte zwischen den körperlich ausgebildeten Trennlinien. Der Abschnitt zwischen zwei benachbarten Trennlinien liegt wenigstens teilweise auf einer gemeinsamen Flanke der benachbarten Struktur. Die Strukturen können beispielsweise eine wellenförmige oder mäanderförmige Erscheinungsform aufweisen. Bei einer mäanderförmigen Struktur kann sich der Abschnitt über die ganze gemeinsame Flanke der benachbarten Strukturen erstrecken. Sind die Strukturen wellenförmig mit unterschiedlicher Amplitude ausgebildet, so weisen vorzugsweise die benachbarten Strukturen Flanken auf, deren Steigung gleich ist. Die Abschnitte zwischen zwei körperlichen Trennlinien liegen dann auf diesen gemeinsamen Flanken.

Die benachbarten Strukturen können statt gemeinsamer Flanken auch gemeinsame Berge und/oder Täler aufweisen.

Es sind Bauformen eines Wabenkörpers bekannt, die aus einer Vielzahl einzelner Bleche aufgebaut sein können. Ferner sind Bauformen bekannt, bei denen der ganze Wabenkörper nur aus einem oder zwei spiralig gewikelten oder mäanderförmig geschichteten Blechen besteht. In den Patentansprüchen und der Beschreibung wird die Bezeichnung verschlungen als Oberbegriff benutzt, wobei es keine Rolle spielt, ob die einzelnen Bleche gewickelt oder gefaltet werden. Auch kann die Erfindung für Bauformen eingesetzt werden, bei denen die strukturierten Bleche nicht durch glatte Blechlagen getrennt sind, sondern benachbarte strukturierte Bleche im Winkel zueinander verlaufende Strukturen aufweisen.

Für manche Anwendungen ist es sinnvoll, daß ein Wabenkörper im Inneren eine größere Wärmekapazität als in seinem eintrittsseitigen Stirnbereich aufweist. Diese Eigenschaft verbessert bei der Verwendung des Wabenkörpers als Katalysatorträgerkörper im Abgassystem eines Verbrennungsmotors die Eigenschaften beim Wiederstart des Motors nach einer Betriebspause und ermöglicht z. B. bei Dieselmotoren und Magermotoren eine kontinuierliche katalytische Umsetzung auch bei stark wechselnden Betriebsbedingungen mit Phasen, bei denen relativ kaltes Abgas zum Katalysator gelangt Die Wärmekapazität läßt sich bei der vorliegenden Erfindung durch die Dicke der Blechlagen beeinflussen, so daß für Teilbereiche die dort zusätzlichen Blechlagen zumindest teilweise dicker gewählt werden können, um die Wärmekapazität in diesen Teilbereichen zu erhöhen.

Zur Herstellung eines monolithischen Wabenkörpers wird vorgeschlagen, vor oder bei dem Ausbilden der Strukturen in jedes Blech auf einer gemeinsam gedachten im wesentlichen quer zur Strömungsrichtung verlaufenden Linie im Abstand zueinander körperliche Trennlinien einzubringen und beidseits der Linie voneinander sich unterscheidende Strukturen auszubilden. Die Ausbildung der unterschiedlichen Strukturen kann nacheinander oder synchron erfolgen.

Die Trennlinie kann durch Schneiden in das Bleche eingebracht werden. Der Schneidvorgang als solcher kann mittels eines Messers, vorzugsweise eines Rotationsmessers erfolgen. Gemäß einem weiteren Vorschlag wird die körperliche Trennlinie in das Blech mittels eines Lasers-Schneidvorgangs ausgebildet.

Man kann Trennlinie und Strukturen vorteilhaft auch gleichzeitig ausbilden, wenn man einen Blechstreifen durch zwei auf einer Achse nebeneinander liegende unterschiedliche Wellwalzen laufen läßt.

Weitere Einzelheiten und Ausführungsbeispiele werden anhand der Zeichnung erläutert. Es zeigen
- Figur 1: in schematischer und perspektivischer Ansicht einen Wabenkörper,
- Figuren 2,3 und 4: Teilansichten von Querschnitten entlang der Linien II-II; III-III und IV-IV nach Figur 1,
- Figur 5: einen schematisierten Längsschnitt durch den Wabenkörper nach Figur 1,
- Figur 6: in perspektivischer Ansicht ein strukturiertes Blech und
- Figur 7: einen weiteren schematisierten Längsschnitt durch einen modifizierten Wabenkörper.

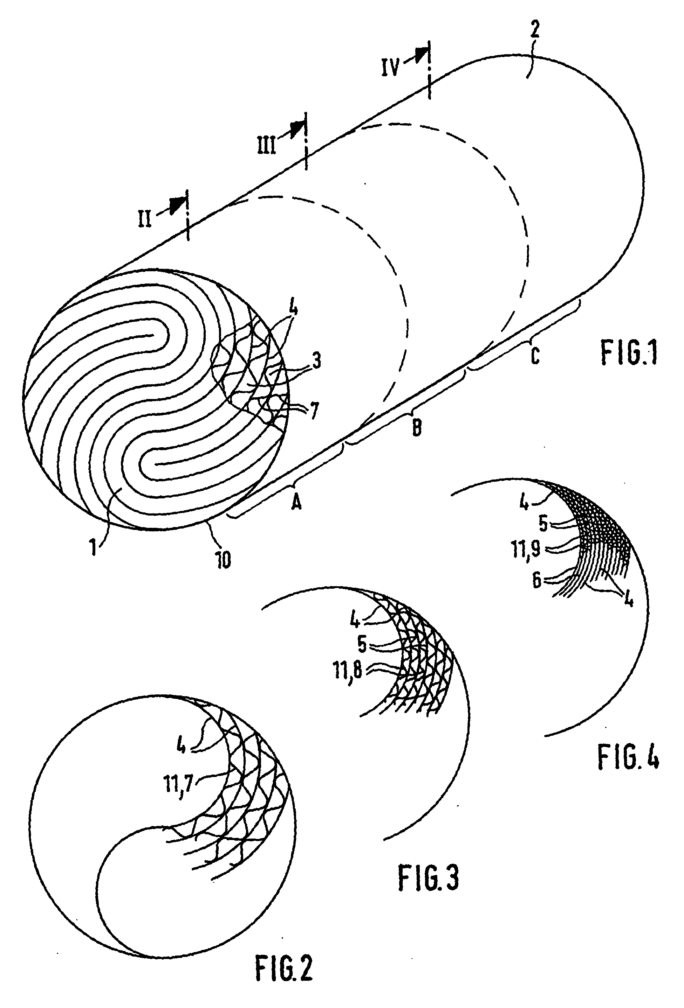

Figur 1 zeigt ein Ausführungsbeispiel eines erfindungsgemäßen Wabenkörpers mit einer anströmseitigen Stirnseite 1 und einer abströmseitigen Stirnseite 2 in perspektivischer Darstellung. Der Wabenkörper erhält seinen inneren Zusammenhalt durch die strukturierten Bleche 11, die sich durch den ganzen Wabenkörper hindurch erstrecken. Die strukturierten Bleche 11 verlaufen jeweils, wie aus den Figuren 2, 3 und 4 ersichtlich ist S-förmig. Die strukturierten Bleche 11 weisen in den Teilabschnitten A, B und C jeweils unterschiedliche Strukturen auf, die mit 7, 8 und 9 bezeichnet sind. Zwischen den strukturierten Blechen 11 sind glatte Bleche 4 angeordnet. Die Strukturen 7, 8 und 9 bilden gemeinsam mit den glatten Blechen 4 jeweils Strömungskanäle 3, deren Querschnittsfläche in den Teilabschnitten A, B und C unterschiedlich ist.

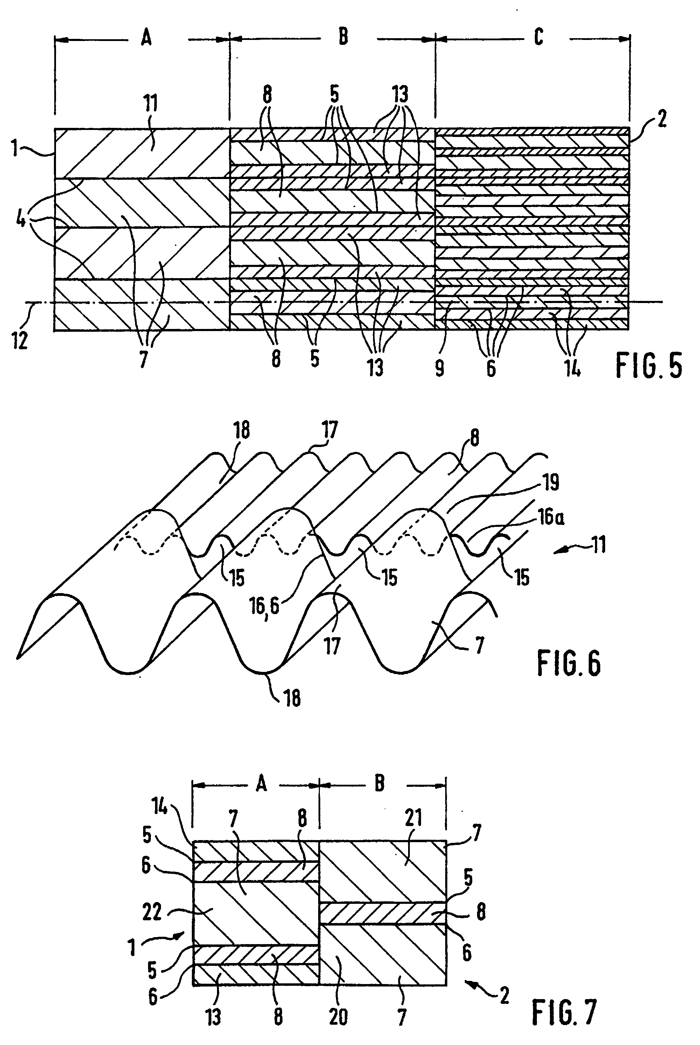

Figur 5 veranschaulicht schematisch einen Wabenkörper im Längsschnitt. Die glatten Bleche sind als durchgezogene Linien dargestellt. Die Schraffuren in der Figur 5 sollen Strukturen gewellter Bleche darstellen.

Der Wabenkörper weist drei Teilabschnitte A, B und C auf. In jedem Teilabschnitt ist die Zahl der Kanäle pro Querschnittsfläche unterschiedlich. In dem Teilabschnitt A weisen die sich von der Anströmseite 1 bis zur Abströmseite 2 streckenden strukturierten Bleche 11 eine Struktur 7 auf, deren Höhe gegenüber den nachfolgenden Teilabschnitten B, C am größten ist. Die strukturierten Bleche 11 sind durch glatte Bleche 4 voneinander getrennt. Die glatten Bleche 4 erstrecken sich bei der in Figur 5 dargesteliten Ausführungsform von der anströmseitigen 1 bis zur abströmseiten 2 Stirnseite. Dies ist dadurch bedingt, da die Summe der Strukturhöhe in den Abschnitten B, C zwischen den Blechen 11 der Strukturhöhe 7 im Teilabschnitt A entspricht. Wie ferner aus der Figur 5 ersichtlich ist, erstreckt sich die Struktur in ihrer Höhe symmetrisch bezüglich einer gestrichelt dargestellten Ebene 12. In dem Teilabschnitt B sind zusätzliche glatte Bleche 5 und strukturierte Bleche 13 angeordnet. Die strukturierten Bleche 13 und die glatten Bleche 5 erstrecken sich nur über den Teilabschnitt B. Die strukturierten Bleche 13 füllen den Zwischenraum zwischen den Strukturen 8 der durchgehenden strukturierten Bleche 11.

In dem Teilabschnitt C sind zusätzliche glatte Bleche 6 angeordnet, welche zwischen den strukturierten Bleche 11, 14 angeordnet sind.

Wir nehmen nun Bezug auf die Figur 6, in welcher schematisch und perspektivisch ein strukturiertes Blech 11 dargestellt ist. Das strukturierte Blech 11 weist eine wellenförmige Struktur auf. Die Wellung wird durch eine evolvente Verzahnung hergestellt. Wie aus der Figur 6 ersichtlich ist, weist das strukturierte Blech 11 eine erste Struktur 7 auf, an die sich eine zweite Struktur 8 anschließt. Die Strukturen 7 und 8 unterscheiden sich hinsichtlich deren Strukturenhöhe sowie des Abstandes zwischen dem Wellenberg 17 und dem Wellental 18. Die gestreckte Länge zwischen den Verbindungsstellen 16 A, 16 B der Struktur 7 entspricht der gestreckten Länge der Struktur 8. Die Strukturen 8 und 7 sind voneinander durch körperliche Trennlinien 15 getrennt. Die Verbindung erfolgt an gemeinsamen Flanken 19. Die Steigung der Flanken 19 sind an den beiden Strukturen 7, 8 an den Verbindungsstellen gleich.

In der Figur 7 ist schematisch ein weiteres Ausführungsbeispiel eines Wabenkörpers dargestellt. Der dargestellte Wabenkörper weist zwei Teilabschnitte A, B auf. Der dargestellte Wabenkörper weist durchgehende strukturierte Bleche 20, 21 und 22 auf. Die strukturierten Bleche 20, 21 und 22 weisen zwei Strukturen 7, 8 auf. Die Struktur 7 ist hinsichtlich ihrer Dimension größer als die Struktur 8.

In dem Teilabschnitt A sind zusätzliche strukturierte Bleche 13, 14 vorgesehen. Der anströmseitige Teilbereich A des Wabenkörpers weist einen zentralen Bereich auf, in dem die Kanäle bezüglich des äußeren Bereichs größer sind. Durch diese Maßnahme wird im äußeren Strömungsbereich des Wabenkörpers die katalytisch wirksame Oberfläche vergrößert. Wie man aus der Figur 7 erkennt, kann die Anzahl der Kanäle pro Querschnittsfläche auch in eine Richtung quer zur Strömungsrichtung variiert werden. Die strukturierten Bleche 20, 21 und 22 sind gleich ausgebildet. Durch eine Drehung des Bleches 22 um 180° um eine Achse im wesentlichen senkrecht zur Strömungsrichtung wird die in der Figur 7 dargestellte Anordung erreicht.

### Bezugszeichenliste

- 1: anströmseitige Stirnseite
- 2: abströmseitge Stirnseite
- 3: Kanal
- 4: glattes Blech
- 5: glattes Blech
- 6: glattes Blech
- 7: Struktur
- 8: Struktur
- 9: Struktur
- 10: Mantel
- 11: strukturiertes Blech
- 12: Ebene
- 13: strukturiertes Blech
- 14: strukturiertes Blech
- 15: Trennlinie
- 16: Verbindungsstelle
- 17: Wellenberg
- 18: Wellental
- 19: Flanke
- 20: strukturiertes Blech
- 21: strukturiertes Blech
- 22: strukturiertes Blech

## Patentansprüche

1. Monolithischer von einem Fluid in einer Strömungsrichtung durchströmbarer Wabenkörper mit einer anströmseitigen Stirnseite (1) und einer von dieser beabstandeten abströmseitigen Stirnseite (2), umfassend lagenweise angeordnete, zumindest teilweise strukturierte Bleche (11, 20, 21, 22), deren Strukturen in Strömungsrichtung Wände von Kanälen (3) bilden,
- wobei die Größe der Kanäle (3) in verschiedenen in Strömungsrichtung hintereinander liegenden Teilabschnitten (A, B, C) variiert;
- wobei zumindest ein Teil der strukturierten Bleche (10, 20, 21, 22) sich von der anströmseitigen (1) zur abströmseitigen Stirnseite (2) erstreckt;
- wobei jedes dieser Bleche (10, 20, 21, 22) mindestens eine erste (7) und eine zweite (8) Struktur unterschiedlicher Dimensionen aufweist; und
- wobei sich mindestens eine dieser Strukturen nur über einen Teilabschnitt (A, B, C) erstreckt.

2. Wabenkörper nach Anspruch 1 mit zwischen den strukturierten Blechen (10, 20, 21, 22) angeordneten glatten oder im Verhältnis zu den Dimensionen der Kanäle (3) schwach strukturierten Blechen (4, 5, 6), **dadurch gekennzeichnet, daß** die glatten oder im Verhältnis zu den Dimensionen der Kanäle (3) schwach strukturierten Bleche (4, 5, 6) sich wenigstens über einen Teilabschnitt (A, B, C) erstrecken.

3. Wabenkörper nach Anspruch 1 oder 2, **dadurch gekennzeichnet, daß** dieser weitere strukturierte Bleche (13, 14, 15) enthält, die sich wenigstens über einen Teilabschnitt (A, B, C) erstrecken.

4. Wabenkörper nach Anspruch 3, **dadurch gekennzeichnet, daß** die Abstände zwischen den sich von der anströmseitigen (1) zur abströmseitigen (2) Stirnseite erstreckenden strukturierten Blechen (10, 20, 21, 22) in wenigstens einem Teilabschnitt (A, B, C) mit den weiteren strukturierten Blechen (13, 14) ausgefüllt sind.

5. Wabenkörper nach Anspruch 3 oder 4, **dadurch gekennzeichnet, daß** die weiteren strukturierten Bleche (13, 14) so angeordnet sind, daß der Wabenkörper in Strömungsrichtung einen konstanten Querschnitt aufweist.

6. Wabenkörper nach einem der Ansprüche 1 bis 5, **dadurch gekennzeichnet, daß** die jeweilige Strukturen (7, 8) der sich von der anströmseitigen (1) zur abströmseitigen (2) Stirnseite erstreckenden Bleche (11, 20, 21, 22) symmetrisch bezüglich einer gemeinsamen Ebene (12) ausgebildet sind.

7. Wabenkörper nach einem der Ansprüche 1 bis 6, **dadurch gekennzeichnet, daß** jedes sich von der anströmseitigen (1) zur abströmseitigen (2) Stirnseite erstreckende Blech (11, 20, 21, 22) zwischen den benachbarten Strukturen (7, 8, 9) unterschiedlicher Dimension im wesentlichen quer zur Strömungsrichtung verlaufende im Abstand zueinander ausgebildete körperliche Trennlinien (15) aufweist.

8. Wabenkörper nach Anspruch 7, **dadurch gekennzeichnet, daß** der Abschnitt zwischen zwei benachbarten Trennlinien (15) wenigstens teilweise auf einer gemeinsamen Flanke (19) der benachbarten Strukturen (7, 8) liegt.

9. Wabenkörper nach Anspruch 7, **dadurch gekennzeichnet, daß** der Abschnitt zwischen zwei benachbarten Trennlinien (15) wenigstens teilweise auf einem gemeinsamen Berg (17) oder im Tal (18) der benachbarten Strukturen (7, 8) liegt.

10. Wabenkörper nach Anspruch 1, **dadurch gekennzeichnet, daß** benachbarte strukturierte Bleche schräg zueinander verlaufende Strukturen aufweisen, die nicht ineinandergleiten können.

11. Wabenkörper nach einem der Ansprüche 1 bis 10, **dadurch gekennzeichnet, daß** zumindest ein Teil der Bleche eine größere Dicke hat als die übrigen Bleche, insbesondere daß die zusätzlichen Bleche in einem inneren Teilbereich (B) eine größere Dicke haben als die durchgehenden Bleche (10; 20; 21; 22).

12. Verfahren zur Herstellung eines monolithischen von einem Fluid in einer Strömungsrichtung durchströmbaren Wabenkörpers bei dem in einem oder mehreren Blech(en) Strukturen ausgebildet und das Blech bzw. die Bleche zu einem Wabenkörper miteinander verschlungen werden, wobei die Strukturen in Strömungsrichtung Wände von Kanälen (3) bilden, **dadurch gekennzeichnet, daß** vor oder bei dem Ausbilden der Strukturen (7, 8, 9) in jedes Blech (11, 20, 21, 22) auf einer gemeinsamen gedachten im wesentlichen quer zur Strömungsrichtung verlaufenden Linie im Abstand zueinander körperliche Trennlinien (15) eingebracht und beidseits der Linie voneinder sich in ihren Dimensionen, insbesondere der Strukturhöhe, unterscheidende Strukturen (7, 8) ausgebildet werden.

13. Verfahren nach Anspruch 11, **dadurch gekennzeichnet, daß** die Trennlinien (15) durch Schneiden in das Blech (11, 20, 21, 22) eingebracht werden.

14. Verfahren nach Anspruch 11, **dadurch gekennzeichnet, daß** die Trennlinien (15) durch Schneiden mittels eines Messers, vorzugsweise eines Rotationsmessers, in das Blech (11, 20, 21, 22) eingebracht werden.

15. Verfahren nach Anspruch 11, **dadurch gekennzeichnet, daß** die Trennlinien (15) durch Laser-Schneiden in das Blech (11, 20, 21, 22) eingebracht werden.

16. Verfahren nach Anspruch 11, **dadurch gekennzeichnet, daß** die Strukturen unterschiedlicher Dimensionen und die Trennlinien gleichzeitig durch Wellen von Blechen mit unterschiedlichen auf einer Achse nebeneinander angeordneten Wellwalzen erfolgt.

## Claims

1. Monolithic honeycomb body, through which a fluid can flow in one direction of flow, with an inlet flow end (1) and an outlet flow end (2) and a distance therefrom, comprising at least partially structured metal sheets (11, 20, 21, 22) arranged in layers, the structures of which sheets in the direction of flow form walls of ducts (3) the size of the ducts (3) varying in different sections (A, B, C) situated in series in the direction of flow; at least one part of the structured metal sheets (10, 20, 21, 22) extending from the inlet flow end (1) to the outlet flow end (2); each of the said metal sheets (10, 20, 21, 22) having at least a first structure (7) and a second structure (8) of different dimensions; and at least one of the said structures extending over only one section (A, B, C).

2. The honeycomb body as claimed in claim 1 with metal sheets (4, 5, 6), that are either smooth or slightly structured in the relation to the dimensions of the ducts (3), arranged between the structured sheets (10, 20, 21, 22), **characterised in that** the metal sheets (4, 5, 6) that are either smooth or slightly structured in relation to the dimensions of the ducts (3), extend over at least one section (A, B, C).

3. The honeycomb body as claimed in claim 1 or 2, **characterised in that** it contains further structured metal sheets (13, 14, 15), that extend at least over one section (A, B, C).

4. The honeycomb body according to claim 3, **characterised in that** the intervals between the structured metal sheets (10, 20, 21, 22), that extend from the inlet flow end (1) to the outlet flow end (2), contain in at least one section (A, B, C) further structured metal sheets (13, 14).

5. The honeycomb body as claimed in claim 3 or 4, **characterised in that** the further structured metal sheets (13, 14) are arranged such that the honeycomb body has a constant cross-section in the direction of flow.

6. The honeycomb body as claimed in one of the claims 1 to 5, **characterised in that** the respective structures (7, 8) of the metal sheets (11, 20, 21, 22) that extend from the inlet flow end (1) to the outlet flow end (2), are formed symmetrically with respect to a common plane (12).

7. The honeycomb body according to one of the claims 1 to 6, **characterised in that** each metal sheet (11, 20, 21, 22), that extends from the inlet flow end (1) to the outlet flow end (2), has physical dividing lines (15) formed at an interval from one another and running essentially traversely to the direction of flow between the adjacent structures (7, 8, 9) of the differing dimension.

8. The honeycomb body as claimed in claim 7, **characterised in that** the section between two adjacent dividing lines is situated at least partially on a common flank (19) of the adjacent structures (7, 8).

9. The honeycomb body as claimed in claim 7, **characterised in that** the section between two adjacent dividing lines (15) is situated at least partially on a common crest (17) or in the trough (18) of the adjacent structures (7, 8).

10. The honeycomb body as claimed in claim I, **characterised in that** adjacent structured metal sheets have structures running traversely to one another, which can not slide into one another.

11. The honeycomb body as claimed in any of claims I to 10, **characterised in that** at least one part of the metal sheets has a greater thickness than the remainer of the metal sheets, in particular that the additional metal sheets in an inner section (B) have a greater thickness than the continuous metal sheets (19, 20, 21, 22).

12. A method for the manufacture of a monolithic honeycomb body, through which a fluid can flow in one direction of flow in which structures are formed in one or more metal sheet(s) and the metal sheet or sheets are intertwined to form a honeycomb body, the structures forming in the direction of flow walls of ducts (3), **characterised in that** before or during the forming of structures (7, 8, 9) mutually spaced physical dividing lines (15) are incorporated into each metal sheet (11, 20, 21, 22) on a common imaginary line running essentially traversely to the direction of flow, and that structures differing in their dimensions, especially in their structure hide, are formed on either side of the line.

13. The method as claimed in claim 11, **characterised in that** the dividing lines (15) are incorporated by cutting into the metal sheets (11, 20, 21, 22).

14. The method as claimed in claim 11, **characterised in that** the dividing lines (15) are incorporated by cutting into the metal sheets (11, 20, 21, 22) with a cutter, preferably a rotary cutter.

15. The method as claimed in claim 11, **characterised in that** the dividing lines (15) are incorporated by laser cutting into the metal sheets (11, 20, 21, 22).

16. The method as claimed in claim 11, **characterised in that** the structures of different dimensions and the dividing lines are formed simultaneously by corrugation of the metal sheets using different corrugated rollers arranged side by side on one axis.

## Revendications

1. Corps en nids d'abeilles monolithique à travers lequel un fluide peut s'écouler dans une direction d'écoulement avec un côté frontal amont (1) et à distance de celui-ci un côté frontal aval (2), le corps en nid d'abeilles comportant des tôles au moins partiellement structurées (11, 20, 21, 22) étant disposées en couches, dont les structurations forment des parois de canaux (3) en direction d'écoulement,
- la taille des canaux (3) variant dans différentes régions partielles (A, B, C) qui se succèdent dans la direction d'écoulement ;
- au moins une partie des tôles structurées (10, 20, 21, 22) s'étendant du côté frontal amont (1) jusqu'au côté frontal aval (2) ;
- chacune de ces tôles (10, 20, 21, 22) présentant au moins une première (7) et une deuxième (8) structuration de dimensions différentes ; et
- au moins une de ces structurations ne s'étendant que sur une région partielle (A, B, C).

2. Corps en nids d'abeilles selon la revendication 1 comportant des tôles lisses ou par rapport aux dimensions des canaux (3) faiblement structurées (4, 5, 6) agencées entre les tôles structurées (10, 20, 21, 22), **caractérisé en ce que** les tôles lisses ou par rapport aux dimensions des canaux (3) faiblement structurées (4, 5, 6) s'étendent sur au moins une région partielle (A, B, C).

3. Corps en nids d'abeilles selon la revendication 1 ou 2, **caractérisé en ce que** celui-ci comprend d'autres tôles structurées (13, 14, 15) qui s'étendent au moins sur une région partielle (A, B, C).

4. Corps en nids d'abeilles selon la revendication 3, **caractérisé en ce que** les écarts entre les tôles structurées (10, 20, 21, 22) s'étendant du côté frontal amont (1) jusqu'au côté frontal aval (2) sont garnis dans au moins une région partielle (A, B, C) avec les autres tôles structurées (13, 14).

5. Corps en nids d'abeilles selon la revendication 3 ou 4, **caractérisé en ce que** les autres tôles structurées (13, 14) sont agencées de telle manière que le corps en nids d'abeilles présente une section constante dans la direction d'écoulement.

6. Corps en nids d'abeilles selon l'une des revendications 1 à 5, **caractérisé en ce que** les structurations respectives (7, 8) des tôles (11, 20, 21, 22) s'étendant du côté frontal amont (1) jusqu'au côté frontal aval (2) sont formées de manière symétrique par rapport à un plan commun (12).

7. Corps en nids d'abeilles selon l'une des revendications 1 à 6, **caractérisé en ce que** chaque tôle (11, 20, 21, 22) s'étendant du côté frontal amont (1) jusqu'au côté frontal aval (2) présente entre les structurations adjacentes (7, 8, 9) de dimension différente des lignes physiques de séparation (15) étant formées à distance l'une de l'autre et s'étendant sensiblement de manière transversale à la direction d'écoulement.

8. Corps en nids d'abeilles selon la revendication 7, **caractérisé en ce que** la région entre deux lignes de séparation adjacentes (15) se trouve au moins partiellement sur un flanc commun (19) des structurations adjacentes (7, 8).

9. Corps en nids d'abeilles selon la revendication 7, **caractérisé en ce que** la région entre deux lignes de séparation adjacentes (15) se trouve au moins partiellement sur une crête commune (17) ou dans le creux (18) des structurations adjacentes (7, 8).

10. Corps en nids d'abeilles selon la revendication 1, **caractérisé en ce que** des tôles adjacentes structurées présentent des structurations s'étendant de manière oblique l'une par rapport à l'autre, qui ne peuvent pas glisser les unes dans les autres.

11. Corps en nids d'abeilles selon l'une des revendications 1 à 10, **caractérisé en ce qu'**au moins une partie des tôles a une épaisseur plus grande que les autres tôles, notamment que dans une région partielle intérieure (B) les tôles supplémentaires ont une épaisseur plus grande que les tôles s'étendant de bout en bout (10 ; 20 ; 21 ; 22).

12. Procédé de fabrication d'un corps en nids d'abeilles monolithique à travers lequel un fluide peut s'écouler dans une direction d'écoulement dans le cas duquel dans une ou plusieurs tôle(s) des structurations sont formées et la tôle respectivement les tôles sont entre-entroulées les unes avec les autres en un corps en nids d'abeilles, les structurations formant des parois de canaux (3) dans la direction d'écoulement, **caractérisé en ce qu'**avant ou lors de la formation des structurations (7, 8, 9) dans chaque tôle (11, 20, 21, 22) des lignes physiques de séparation (15) sont introduites à distance l'une de l'autre sur une ligne commune fictive s'étendant sensiblement de manière transversale par rapport à la direction d'écoulement et que des structurations (7, 8) sont formées des deux cotés de la ligne qui se différencient dans leurs dimensions, notamment en hauteur de structuration.

13. Procédé selon la revendication 11, **caractérisé en ce que** les lignes de séparation (15) sont introduites par coupage dans la tôle (11, 20, 21, 22).

14. Procédé selon la revendication 11, **caractérisé en ce que** les lignes de séparation (15) sont introduites dans la tôle (11, 20, 21, 22) par coupage au moyen d'un couteau, de préférence au moyen d'un couteau rotatif.

15. Procédé selon la revendication 11, **caractérisé en ce que** les lignes de séparation (15) sont introduites dans la tôle (11, 20, 21, 22) par découpage au laser.

16. Procédé selon la revendication 11, **caractérisé en ce que** les structurations de dimensions différentes et les lignes de séparation sont formées simultanément par ondulation de tôles au moyen de rouleaux d'ondulation différents agencés l'un à coté de l'autre sur un axe.
